## Europäisches Patentamt
## European Patent Office
## Office européen des brevets

(19)

(11) Numéro de publication: **0 067 729**
**B1**

(12) **FASCICULE DE BREVET EUROPÉEN**

(45) Date de publication du fascicule du brevet:
26.11.86

(51) Int. Cl.⁴: **B 62 M 9/12**

(21) Numéro de dépôt: **82400839.5**

(22) Date de dépôt: **06.05.82**

(54) **Mécanisme de dérailleur pour bicyclette.**

(30) Priorité: **17.06.81 FR 8111972**

(43) Date de publication de la demande:
**22.12.82 Bulletin 82/51**

(45) Mention de la délivrance du brevet:
**26.11.86 Bulletin 86/48**

(84) Etats contractants désignés:
**BE DE GB IT LU NL**

(56) Documents cité:
**EP-A-0 032 049**
**CH-A-191 396**
**FR-A-768 793**
**FR-A-971 656**
**FR-A-2 153 647**

(73) Titulaire: **HURET ET SES FILS Société dite:, 60 Avenue Félix Faure, F-92000 Nanterre (FR)**

(72) Inventeur: **Coue, Maurice Emmanuel Louis, 6 Résidence du Vieux Puits, F-78810 Feucherolles (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1986

## Description

La présente invention concerne les mécanismes de dérailleurs utilisés pour changer de rapport sur une bicyclette, qu'il s'agisse aussi bien de dérailleurs arrière que de dérailleurs de pédalier.

On sait que les mécanismes de dérailleurs comprennent en général un organe mobile de guidage ou de déplacement de la chaîne cet organe mobile étant relié à un organe de support par deux biellettes parallèles, cet ensemble constituant donc un parallélogramme articulé. Le passage de la chaîne d'un plateau à l'autre ou d'un pignon de roue libre à un autre est réalisé au moyen d'un organe d'actionnement qui est en général un câble dont une extrémité est fixée soit, sur l'organe mobile, soit sur l'une des deux biellettes et dont l'autre extrémité est reliée à une manette de commande.

Un tel mécanisme comprend donc deux biellettes et quatre axes d'articulation de sorte qu'il est relativement coûteux en fabrication et au montage.

On connaît par ailleurs du document FR-A-2 153 647 correspondant au préambule de la revendication 1 un mécanisme de commande de dérailleur avant dans lequel l'une des biellettes est remplacée par une came en arc de cercle sur laquelle se déplace un galet porté par la chape de guidage de la chaîne. Cependant, dans un tel agencement, le guidage du galet n'est pas positif car ce galet doit être appliqué contre la came par un ressort et cela peut nuire à la précision de la commande. De plus, le galet peut se dégager de la came, aux extrémités de celle-ci.

Le but de cette invention est de proposer un mécanisme fiable et précis de construction encore plus simple, dont le prix de revient soit inférieur et le montage facilité.

A cet effet, l'invention a pour objet un mécanisme de dérailleur pour bicyclette, du type comprenant un organe mobile de guidage ou de déplacement de la chaîne, relié à un organe de support de façon à pouvoir être déplacé en translation par rapport à ce support au moyen d'un organe d'actionnement, l'organe mobile portant un bras latéral muni d'un ergot et étant relié à l'organe de support, d'une part au moyen d'une biellette et, d'autre part, au moyen d'une liaison comprenant l'ergot et une surface de guidage de l'ergot, ayant la forme d'un arc de cercle dont le rayon est égal à la distance séparant les deux axes d'articulation de la biellette, caractérisé en ce que la surface de guidage est une lumière dans laquelle est reçu l'ergot et dont au moins l'une des deux extrémités sert de butée de fin de course pour déterminer au moins l'une des positions extrêmes de l'organe mobile, et en ce que la biellette est articulée sur le bras latéral.

Suivant une caractéristique additionnelle de l'invention, dans le cas où une seule des extrémités de la lumière sert de butée de fin de course, il est prévu une butée réglable déterminant l'autre position extrême de l'organe mobile, et cette butée réglable coopère avec le bord supérieur du bras latéral précité.

L'invention va être décrite plus en détail ci-dessous en se référant au dessin annexé, donné à titre d'exemple et sur lequel:

- les Fig. 1 et 2 sont deux vues en élévation d'un mécanisme de dérailleur suivant l'invention, représenté dans deux positions différentes;

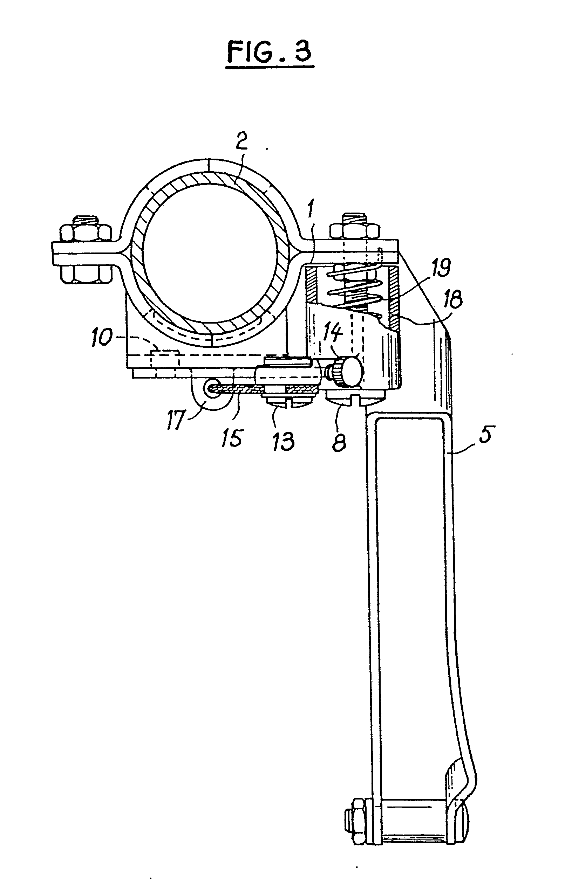

- la Fig. 3 est une vue de dessus avec arrachement du mécanisme dans sa position de la Fig.1.

Dans l'exemple choisi, l'invention est supposée appliquée à un mécanisme de dérailleur de pédalier, les plateaux de ce pédalier non plus que la chaîne n'étant ici représentés.

Le mécanisme comprend un organe de support 1 constitué ici par un collier pouvant être fixé sur un cadre de bicyclette. Ce support et le tube 2 sur lequel il est fixé peuvent comporter des moyens de centrage complémentaires tels que par un exemple, un pion 3 prévu sur le tube et un logement 4 ménagé dans le support.

L'organe mobile 5 servant à guider et à déplacer la chaîne comprend ici une fourchette ou chape de construction classique et qui n'a donc pas à être décrite en détail. Cette fourchette est portée par un bras latéral 6. Ce dernier est relié au support par une biellette 7 articulée autour de deux axes 8 et 9. De plus, ce même bras latéral porte au voisinage de son extrémité un ergot ou un doigt 10 guidé dans une lumière 11 de forme incurvée prévue sur le support 1. Cette lumière a une forme en arc de cercle dont le rayon $r$ est égal à la distance séparant les deux axes d'articulation de la biellette 7.

Dans le mode de réalisation choisi, le centre 0 de l'arc de cercle qui constitue la ligne moyenne de cette lumière est disposé de telle façon que le segment joignant ce centre à l'axe 8 d'articulation de la biellette sur le support soit égal et parallèle au segment joigant le centre de l'ergot 10 à l'axe 9 d'articulation de la bielleette sur l'organe mobile.

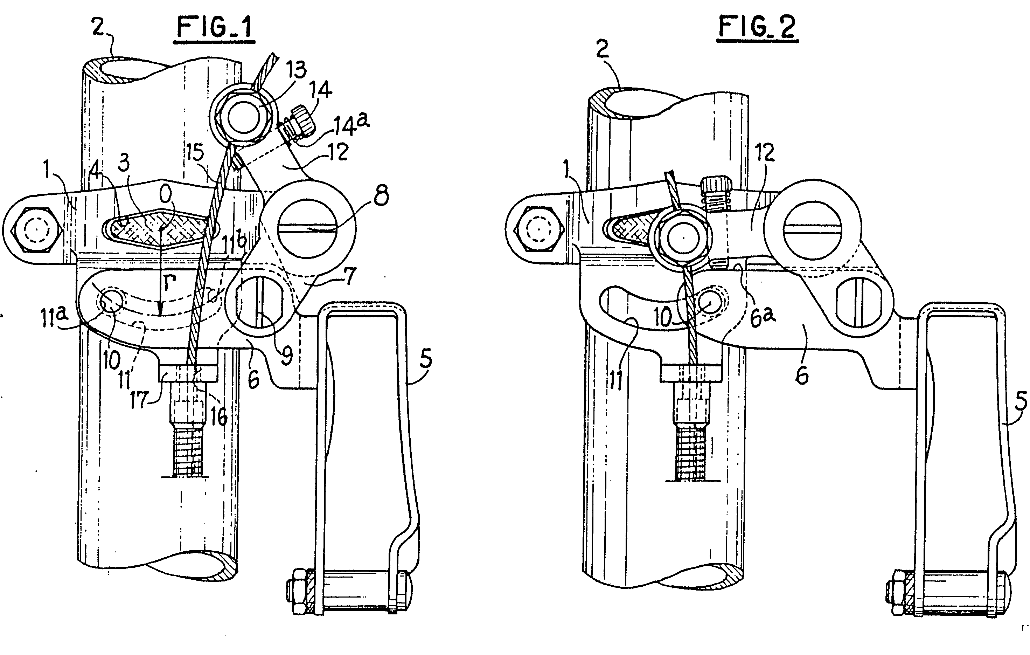

Dans l'exemple représenté, la longueur de la lumière est choisie légèrement supérieuré à la course utile de l'ergot 10, comme cela est visible sur la Fig. 2.

Dans un autre mode de réalisation cette longueur peut être choisie de façon à correspondre très exactement à la longueur de la course utile dudit ergot.

Dans un mode de réalisation préféré, la biellette fait partie d'un ensemble plus complexe qui constitue à la fois un levier d'actionnement et un logement pour un ressort de rappel. C'est ainsi que la biellette est prolongée par un bras 12 sur lequel sont prévus, d'une part, un serre-câble 13 de construction classique et, d'autre part, une butée 14 réglable et munie de moyens de freinage 14ª, cette butée étant destinée à coopérer avec le bord supérieur 6ª du bras latéral 6.

Un câble d'actionnement 15 fixé dans le serrecâble 13 à l'extrémité du bras 12 passe dans un orifice 16 ménagé dans une patte 17 du support qui sert de butée de gaine.

La pièce qui constitue la biellette 7 et le bras 12 délimite également un logement 18 dans lequel est disposé un ressort de rappel 19 travaillant en torsion et qui tend à rappeler l'organe mobile et par conséquent le mécanisme dans la position représentée sur la Fig. 1. Ce ressort est disposé coaxialement à l'axe 8.

Le fonctionnement de ce mécanisme est tout à fait analogue à celui d'un dérailleur traditionnel et n'a donc pas à être décrit en détail. On indiquera simplement qu'à partir de la position de la Fig. 1, correspondant à la position de la chaîne sur le petit plateau, sous l'effet d'une traction exercée sur le câble 15, le mécanisme se déforme pour atteindre la position de la Fig. 2 dans laquelle la chaîne est passée sur le grand plateau. Les deux positions extrêmes sont ici déterminées d'une part, par la venue en butée de l'ergot 10 contre l'une des extrémités 11ª: de la lumière 11 et par la venue en contact de la butée réglable 14 contra le bord supérieur 6ª du bras 6.

Ainsi qu'on l'a déjà signalé, dans un autre mode de réalisation et en supposant que le montage du dérailleur soit suffisamment précis, la butée réglable peut être éliminée et les deux positions extrêmes de l'organe mobile déterminées par la venue en contact de l'ergot 10 avec les deux extrémités 11ª, 11ᵇ de la lumière 11.

Le mécanisme que l'on vient de décrire est particulièrement simple et comporte un nombre de pièces très réduit. Ceci résulte de l'utilisation d'une liaison à ergot et lumière qui remplace une biellette et ses deux axes d'articulation. Une simplification importante est également obtenue du fait de la suppression d'une ou même de deux butées réglables déterminant les fins de course du mécanisme.

Dans une variante, l'ergot 10 est porté par le support 1 et la lumière 11 délimitée par le bras latéral 6. Dans ce cas, la lumière a le même rayon r mais a sa concavité dirigée vers le bas, en considérant les Fig. 1 et 2, pour obtenir un guidage équivalent à celui représenté.

L'invention a été décrite à propos d'un dérailleur de pédalier. Il va de soi que le même mécanisme peut être utilisé avec les mêmes avantages dans un dérailleur arrière.

## Revendications

1 - Mécanisme de dérailleur pour bicyclette, du type comprenant un organe mobile (5) de guidage ou de déplacement de la chaîne, relié à un organe de support (1) de façon à pouvoir être déplacé en translation par rapport à ce support au moyen d'un organe d'actionnement (15), l'organe mobile (5) portant un bras latéral (6) muni d'un ergot et étant relié à l'organe de support (1), d'une part au moyen d'une biellette (7) et, d'autre part, au moyen d'une liaison comprenant l'ergot (10) et une surface de guidage de l'ergot, ayant la forme d'un arc de cercle dont le rayon est égal à la distance séparant les deux axes d'articulation de la biellette, caractérisé en ce que la surface de guidage est une lumière (11) dans laquelle est reçu l'ergot (10) et dont au moins l'une des deux extrémités (11a, 11b) sert de butée de fin de course pour déterminer au moins l'une des positions extrêmes de l'organe mobile (5), et en ce que la biellette (7) est articulée sur le bras latéral (6).

2 - Mécanisme selon la revendication 1, caractérisé en ce que la biellette (7) prolongée par un bras d'actionnement (12) délimite également un logement (18) pour un ressort de rappel (19).

## Patentansprüche

- 1. Gangschalteinrichtung für Fahrräder, umfassend ein bewegliches Organ (5) zum Führen oder zum Versetzen der Kette, welches so mit einem Support (1) verbunden ist, daß es in Bezug zu diesem Support mittels eines Betätigungsorgans (15) translatorisch versetzt werden kann, wobei das bewegliche Organ (5) einen seitlich abstehenden, mit einem Kulissenfortsatz versehenen Arm (6) trägt, welcher mit dem Support (1) einerseits über einen Schwenkhebel (7) und andererseits über eine Verbindungseinrichtung verbunden ist, die den Kulissenfortsatz und eine Führungsfläche zur Führung des Kulissenfortsatzes umfaßt, wobei die Führungsfläche die Form eines Kreisbogens mit einem der Entfernung zwischen den beiden Schwenkachsen des Schwenkhebels entsprechenden Radius hat, dadurch gekennzeichnet, daß die Führungsfläche eine den Kulissenfortsatz (10) aufnehmende Ausnehmung (11) ist, von welcher wenigstens eines der beiden Enden (11a, 11b) als wegbegrenzender Endanschlag zur Bestimmung wenigstens einer der Endlagen des beweglichen Organs (5) dient, und daß der Schwenkhebel (7) am seitlich abstehenden Arm (6) schwenkbar befestigt ist.

2. Einrichtung nach Anspruch 1, dadurch gekennzeichnet, daß der durch einen Betätigungsarm (12) verlängerte Schwenkhebel (7) außerdem eine Aufnahme (18) für eine Rückstellfeder (19) bildet.

## Claims

1 - A derailleur mechanism for a bicycle, of the type comprising a movable member (5) for guiding or shifting the chain, connected to a support member (1) in such manner as to be displaced in translation with respect to said support by an actuating member (15), the movable member carrying a lateral arm (6) provided with a pin and being connected to the support member (1), on one hand by a link (7) and, on the other hand, by a connection comprising the pin (10) and a guiding surface for the pin, having the shape of an arc of a circle whose radius is equal to the distance between the two pivot axes of the link, characterized in that the guiding surface is a slot (11) wherein the pin (10) is engaged and which has two ends (11ᵃ, 11ᵇ) at least one of the two ends of the slot acting as an end-of-travel abutment for determining at least one of the end positions of the movable member (5), and in that the link (7) is articulated on the lateral arm (6).

2 - A mechanism according to claim 1, characterized in that the link (7) is extended by an actuating arm (12) defining a cavity (18) for a return spring (19).

FIG. 2

FIG. 1

# FIG.3